# EUROPEAN PATENT SPECIFICATION

(11) **EP 2 761 376 B1**
(45) Date of publication and mention of the grant of the patent: **12.10.2016**
(21) Application number: 12835196.2
(22) Date of filing: 30.08.2012
(51) Int. Cl.: G03G 15/14, F16G 5/16, G03G 15/16, B29L 31/00, B29L 29/00, B29K 105/00, B29C 39/00, B29K 77/00, F16G 1/14

(54) **ENDLESS BELT**
ENDLOSBAND
COURROIE SANS FIN

(30) Priority: 30.09.2011 KR 20110100152
(43) Date of publication of application: 06.08.2014
(73) Proprietor: Kolon Industries, Inc., Gwacheon-si, Gyeonggi-do 13837 (KR)
(72) Inventor: KWAK, Ki Nam, Yongin-si, Gyeonggi-do 446-771 (KR); KIM, Sang Kyun, Yongin-si, Gyeonggi-do 446-913 (KR); BACK, Sung Hoon, Yongin-si, Gyeonggi-do 446-777 (KR); LEE, Chun Im, Suwon-si, Gyeonggi-do 443-470 (KR); SONG, Sang Min, Seongnam-si, Gyeonggi-do 463-500 (KR)
(74) Representative: Ter Meer Steinmeister & Partner
(86) International application number: PCT/KR2012/006918
(87) International publication number: WO 2013/048019

(56) References cited:
- EP-A1- 1 209 184
- EP-A1- 2 072 580
- EP-A2- 2 280 320
- JP-A- H1 010 880
- JP-A- 2001 099 248
- JP-A- 2002 316 709
- JP-A- 2002 316 709
- JP-A- 2011 070 199
- KR-B1- 100 995 563
- US-A1- 2011 143 115

## Description

### Technical Field

The present invention relates to an endless belt which can be used as an intermediate transfer belt of an image forming apparatus, and, more particularly, to a reliable endless belt having uniform surface resistivity and improved durability and a method of manufacturing the same.

### Background Art

Generally, belts are used in various fields, and have been used as parts for replacing gears in industries that use a rotation shaft and a motor, such as the automobile industry, the conveyor industry and the like. Particularly, belts have been used in electronic appliances, such as copiers, laser beam printers, facsimiles and the like, to fix and transfer a toner image formed on a copy paper or a transfer paper, and thus have been used as a fuser belt, an intermediate transfer belt or a conveyor belt.

Belts require antistatic performance because an electrostatic phenomenon easily occurs while they rotate. In electronic appliances, semiconductivity for antistatic performance may be used as a physical property that transfers toner.

There is a variety of such belts. They vary from small-size belts having a diameter of about 20 mm and large-size belts having a diameter of several meters, based on tubular belts. However, most of the belts are seam belts, each of which is composed of flat belts or V belts jointed with each other. These seam belts are problematic in that the surface characteristics of the seam are different from those of the periphery thereof because the seam is uneven. In particular, the unevenness of an intermediate transfer belt of an electronic appliance using an even plane of a belt, particularly, a color laser printer damages an optical drum or deteriorates the quality of a printed image. Further, when the seam is somewhat warped, the linearity of a tubular belt is damaged, thus causing the tubular belt to meander. When a belt is detached from a driving roller due to the meandering of the belt, there is a problem of damaging the electronic appliance itself.

Therefore, if a tubular belt does not have a seam, the belt can exhibit the highest durability, it is possible to prevent the belt or a thing contacting the belt from bouncing during rotation because it has evenness, and the belt can easily obtain linearity.

In particular, a fuser belt, an intermediate transfer belt and the like, which are used for electronic appliances, such as printers, copiers, complex machines, facsmiles, etc., must have an excellent antifouling property, heat resistance, heat radiation characteristics, elasticity, durability, water repellency, oil repellency and antistatic properties, and must have an appropriate surface resistance value in order to transfer toner. In this case, when the surface resistance value of the belt is less than or more than the desired surface resistance value, its physical properties, such as antistatic properties, transferability, image characteristics, releasibility and antifouling property, become poor, thus causing the printed image to become poor.

Such a fuser belt, an intermediate belt or the like is made of a polycarbonate resin, a polyvinylidene fluoride resin, a polyamide imide resin, a polyimide resin or rubber, and may be manufactured by mixing a conductive additive such as carbon black or the like with the resin or rubber or by dispersing the conductive additive in the resin or rubber. Among these resins, in order to conduct printing rapidly, a polyimide resin is preferably used because the intermediate belt requires that the color overlap and dislocation thereof attributable to the deformation thereof during its traveling do not occur, because it requires high strength to such a degree that it can be repetitively used sufficiently, and because it requires flame retardance. Further, a conductive additive, such as carbon black or the like, is used as a conductive filler. In this case, when the conductive additive is not added in a suitable amount, it is difficult to sufficiently assure the electrical conductivity of a semiconductive resin to a desired degree, and a large amount of dispersant is required to assure the uniformity of surface resistance, thus resulting in the deterioration of the durability of the belt.

As a conventional technology related to an endless belt including a polyimide resin and a conductive filler, Korean Unexamined Patent Application Publication No. 10-2011-0032917 discloses an endless belt, which includes a polyimide resin or a polyamide imide resin, which has an initiation temperature of 300°C or more at which the weight reduction thereof measured by thermogravimetric analysis is 5%, which has a surface resistance value of 10⁷∼ 10¹³/sq, and which has a surface resistance deviation of 10¹ or less, which is defined by the difference between the maximum surface resistance and the minimum resistance measured at ten sites of one product.

US 2011/143115 discloses an intermediate transfer member comprising a polyimide and conductive fillers. Specific molecular weights are selected.

### Disclosure of Invention

### Technical Problem

Accordingly, the present invention has been made to solve the above-mentioned problems, and an object of the present invention is to provide an endless belt having improved durability and uniform surface resistivity.

### Solution to Problem

In order to accomplish the above object, an aspect of the present invention provides an endless belt as claimed in claim 2.

The problem of the above-mentioned conventional technology is that the resistance in one semiconductive endless belt for an image forming apparatus is irregular and the difference in surface resistivity between semiconductive endless belts produced by several batches exists. The semiconductive endless belt for an image forming apparatus serves to bring a transfer roller into contact with a photoconductor, to transfer a toner charged with electricity from the photoconductor to the belt by applying a voltage, to bring the transfer roller into contact with a recording medium such as paper or the like and to secondarily transfer the toner charged with electricity to the recording medium.

When the surface resistivity of one semiconductive endless belt for an image forming apparatus is uniform and the surface resistivity of any one semiconductive endless belt is equal to those of other semiconductive endless belts, it is possible to uniformly transfer toner.

Semiconductive polyamic acid, existing in a state in which a polyimide resin containing a conductive filler is not formed into an endless belt yet, has fluidity because it is not imidized yet. In this case, when the semiconductive polyamic acid is a mixture of low-molecular-weight polyamic acid and high-molecular-weight polyamic acid, the molecular weight of the low-molecular-weight polyamic acid is rapidly reduced with the passage of time compared to the high-molecular-weight polyamic acid. Therefore, nonuniform polyamic acid accelerates the reagglomeration of a conductive filler. Accordingly, semiconductive polyamic acid is less influenced by the environment as its molecular weight distribution approximates a single peak.

Further, when a large amount of low-molecular-weight polyamic acid is included in the prepared semiconductive polyamic acid, at the time of storing the semiconductive polyamic acid or applying the semiconductive polyamic acid to a mold and then drying it, unreacted monomers react with each other, thus causing the reagglomeration of a conductive filler.

In contrast, when a large amount of high-molecular-weight polyamic acid is included in the prepared semiconductive polyamic acid, the viscosity of the semiconductive polyamic acid increases, and the spreadability of a coating solution becomes poor when the molecular weight of the semiconductive polyamic acid reaches a predetermined molecular weight, so that it is difficult to apply the semiconductive polyamic acid to a mold.

Considering such points, the polyimide resin should have a molecular weight distribution (Mw/Mn) of 1.3 ∼ 3.0 and a weight average molecular weight (Mw) of 30,000 ∼ 300,000.

Another aspect of the present invention provides a method of manufacturing an endless belt as claimed in claim 1, including the steps of: reacting a diamine monomer with a dianhydride monomer in a reactor filled with a conductive filler-dispersed liquid to obtain a reaction product, aging the reaction product and then discharging the aged reaction product from the reactor to prepare a semiconductive polyamic acid solution having a molecular weight distribution (Mw/Mn) of 1.3 ∼ 3.0 and a weight average molecular weight (Mw) of 30,000 ∼ 300,000; and applying the semiconductive polyamic acid solution to a seamless mold and completing an imidization reaction to obtain a polyimide film.

The method is characterized in that, when raw materials are introduced into a conductive filler-dispersed liquid to obtain a reaction product and then the reaction product is aged for a predetermined amount of time under predetermined conditions, the amounts of unreacted monomer and low-molecular-weight polyamic acid are minimized, thus allowing the entire polyamic acid to have a uniform molecular weight distribution.

In the method, the aging of the reaction product can be adjusted within the range meeting the molecular weight distribution and weight average molecular weight of the above polyamic acid. The aging of the reaction product is performed at a temperature of 25 ∼ 55°C for 3 ∼ 72 hours.

### Advantageous Effects of Invention

The endless belt of the present invention can be used as an intermediate transfer belt of an image forming apparatus.

Further, the endless belt of the present invention has uniform surface resistivity and has excellent mechanical properties because low-molecular-weight polyamic acid is removed therefrom. Thus, this endless belt can be used as an intermediate transfer belt having durability.

### Best Mode for Carrying out the Invention

Hereinafter, preferred embodiments of the present invention will be described in detail.

The endless belt of the present invention is manufactured by imidizing the semiconductive polyamic acid solution obtained by adding carbon nanotubes to a polyamic acid solution prepared by the reaction of dianhydride and diamine.

Dianhydride and diamine are not particularly limited as long as they can be used to prepare a polyimide resin. Examples of the diamines may include 1,4-phenylenediamine (1,4-PDA), 1,3-phenylenediamine (1,3-PDA), 4,4'-methylenedianiline (MDA), 4,4'-oxydianiline (ODA), 4,4'-oxyphenylenediamine (OPDA) and the like. Example of the dianhydrides may include 1,2,4,5-benzenetetracarboxylic dianhydride (PMDA), 3,3',4,4'-biphenyltetracarboxylic dianhydride (BPDA), 4,4'-oxydiphthalic dianhydride (ODPA),
4,4'-hexafluoroisopropylidenediphthalic dianhydride and the like. Generally, diamine and dianhydride are used in equimolar amounts.

The molecular weight of the polyimide resin of the present invention can be controlled depending on the kind of dianhydride or diamine or the polymerization condition thereof, but, preferably, can be controlled by adjusting the molar ratio of dianhydride and diamine. Specifically, the molar ratio of dianhydride/diamine may be adjusted in a range of 100/100∼90 or 100-90/100. When the molar ratio thereof greatly deviates from the range, the molecular weight of the polyimide resin decreases, the mechanical strength of the formed belt decreases, and the conductive filler dispersed in the semiconductive polyamic acid reagglomerates, thus increasing the nonuniformity of the surface resisitivity of the formed belt.

Examples of the solvents used to polymerize the polyimide resin of the present invention may include amide-based polar solvents, such as N-methyl-2-pyrrolidone, N,N-dimethyl acetamide, N,N-dimethyl formamide, N,N-diethyl acetamide, N,N-diethyl formamide, N-methyl caprolactam and the like. They may be used independently or in a mixture thereof.

The polyimide resin of the present invention may be polymerized under the condition that both dianhydride and diamine are introduced and then ejected after the viscosity thereof increases. However, even if the apparent viscosity thereof increases immediately after both dianhydride and diamine are introduced, when they are not sufficiently aged at a predetermined temperature for a predetermined amount of time, a part of dianhydride and diamine does not react, thus remaining as an unreacted product. In this case, when the reaction product is analyzed using gel permeation chromatography (GPC), it can be ascertained that low-molecular-weight polyamic acid and high-molecular-weight polyamic acid are mixed with each other, and thus the molecular weight distribution of polyamic acid is wide. When both dianhydride and diamine are introduced and then aged at a predetermined temperature for a predetermined amount of time, the unreacted product of dianhydride and diamine slowly reacts with low-molecular-weight polyamic acid, thus allowing the polyamic acid to have uniform molecular weight throughout. In this case, when the reaction product is analyzed using gel permeation chromatography (GPC), it can be ascertained that the molecular weight distribution of polyamic acid is narrow. Even when the molecular weight distribution of polyamic acid is wide, an endless belt can be formed after the imidization of polyamic acid. However, when the molecular weight distribution of polyamic acid is wide, the polyamic acid prepared in a large amount becomes nonuniform, and the conductive filler dispersed in the nonuniform polyamic acid reagglomerates to deteriorate dispersability, so that, at the time forming an endless belt, the surface resistivity deviation occurs between belts or within a belt, and, when this belt is mounted on an image forming apparatus, toner is nonuniformly transferred and the difference in printed image quality between the image forming apparatuses is caused. Since the reagglomerated conductive filler causes the glossiness of an endless belt to be deteriorated, when the glossiness of the endless belt is measured, it can be ascertained that the conductive filler has reagglomerated to some degree. Further, since low-molecular-weight polyamic acid causes the mechanical properties of the formed endless belt to be partially deteriorated, it acts to crack the endless belt at the time of conducting the folding endurance test on the endless belt, thus rapidly decreasing the folding endurance of the endless belt.

As such, it can be satisfied that the molecular weight distribution (Mw/Mn) of the polyimide resin obtained by aging during polymerization is 1.3 ∼ 3.0 and the weight average molecular weight (Mw) thereof is 30,000 ∼ 300,000.

As described above, semiconductive polyamic acid, existing in a state in which a polyimide resin containing a conductive filler is not formed into an endless belt yet, has fluidity because it has not yet imidized. In this case, when the semiconductive polyamic acid is a mixture of low-molecular-weight polyamic acid and high-molecular-weight polyamic acid, the molecular weight of the low-molecular-weight polyamic acid is rapidly reduced with the passage of time compared to the high-molecular-weight polyamic acid. Therefore, nonuniform polyamic acid accelerates the reagglomeration of a conductive filler. Accordingly, semiconductive polyamic acid is less influenced by the environment as its molecular weight distribution approximates a single peak. Further, when a large amount of low-molecular-weight polyamic acid is included in the prepared semiconductive polyamic acid, at the time of storing the semiconductive polyamic acid or applying the semiconductive polyamic acid to a mold and then drying it, unreacted monomers react with each other, thus causing the reagglomeration of a conductive filler. In contrast, when a large amount of high-molecular-weight polyamic acid is included in the prepared semiconductive polyamic acid, the viscosity of the semiconductive polyamic acid increases, and the spreadability of a coating solution becomes poor when the molecular weight of the semiconductive polyamic acid reaches a predetermined molecular weight, so that it is difficult to apply the semiconductive polyamic acid to a mold. Considering such points, it is preferred that the molecular weight distribution (Mw/Mn) of the polyimide resin be 1.3 ∼ 3.0 and that the weight average molecular weight (Mw) of the polyimide resin be 30,000 ∼ 300,000.

Carbon nanotubes are used as the conductive filler of the present invention. Research into carbon nanotubes has been actively done since they were first recovered by Iijima [S. Iijima, Nature Vol. 354, P.56 (1991)]. Carbon nanotubes have latent physical properties, such as a high elastic modulus of about 1.0 ∼ 1.8 TPa which are not obtained from conventional materials, high heat resistance by which they can endure even at a high temperature of 2800°C in vacuum, high thermal conductivity which is approximately two times that of diamond, and current transfer ability which is approximately 1000 times that of copper. Therefore, it has been thought that there is a very high possibility of carbon nanotubes to be applied in various fields of nanoscale electric devices, nanoscale electronic devices, nanosensors, photoelectronic devices, high-function composite materials, and the like.

Conventional methods of using carbon black as a filler for imparting an endless belt for an image forming apparatus with conductivity have been known. However, since carbon black must be added in an amount of 10 wt% or more in order to increase the conductivity of a polyimide resin having an insulating property to such a degree that toner can be charged with electricity, there is a problem in that the carbon black added in large amount deteriorates the original excellent mechanical properties of the polyimide resin.

Meanwhile, it is preferred that an endless belt is a seamless belt, and the manufacturing method thereof is not particularly limited. In the present invention, for example, the endless belt can be manufactured by coating the surface of a cylindrical mold with a polyimide resin solution using a dispenser and then heat-treating the cylindrical mold coated with the polyimide resin solution. The heat treatment is performed at 50 ∼ 400°C in steps. First, pre-baking is carried out at 50 ∼ 100°C for 10 ∼ 120 minutes to primarily remove the solvent and moisture remaining on the surface of the cylindrical mold coated with the polyimide resin solution. Subsequently, the polyimide resin solution applied on the surface of the cylindrical mold is post-cured by heating it to 350 ∼ 400°C at a heating rate of 2 ∼ 10 °C/min to completely remove the solvent and moisture remaining on the surface of the cylindrical mold, thereby imidizing the post-cured polyimide resin to manufacture a solidified endless belt.

In the process of manufacturing an endless belt, when the thickness of the belt is excessively decreased, the strength of the belt greatly decreases, so that the belt may crack or be distorted by repetitive rotation stress during a printing process. It is preferred that the thickness of the belt be 30 ∼ 300µm.

### Mode for the Invention

Hereinafter, the present invention will be described in more detail with reference to the following Examples. However, these Examples are set forth to illustrate the present invention, and the scope of the present invention is not limited thereto.

### Example 1

1488 g of DMF, 1.30 g of carbon nanotubes (multiwall carbon nanotubes: NC7000, manufactured by Nanocyl Corporation) and 1.30 g of a dispersant (Triton X-100) were mixed in a 2L four-neck flask provided with a mechanical stirrer, a reflux condenser and a nitrogen inlet, and then nitrogen was introduced into the four-neck flask. Subsequently, the mixture was dispersed by ultrasonic waves of 200 W and 40 kHz for 30 minutes, and was then centrifugally-separated at rotation speed of 12000 rpm for 5 minutes using a centrifugal separator (RC5C, manufactured by Sorvall Instruments Corporation) to allow solids to settle to the bottom of the centrifugal separator. Then, the settled solids were removed to obtain a carbon nanotube-dispersed liquid. Subsequently, a temperature-controllable water bath was provided, and a reaction temperature was set at 35°C, and then 68.7 g of ODA (manufactured by Wakayama Corporation, Japan) and 24.7 g of 1,4-PDA (manufactured by Dupont Corporation) were dissolved in the carbon nanotube-dispersed liquid, and then 166.6 g of BPDA (manufactured by Ube Industries, Ltd.) was added thereto. After the raw material was completely introduced, the temperature of a reactor was increased to 55°C, and then the reaction product was aged for 3 hours to prepare semiconductive polyamic acid.

The prepared semiconductive polyamic acid was a uniform black solution, and had a viscosity of 20 Pa.s (200 poises).

A seamless mold made of chromium-plated SUS 304 and having a diameter of 300 mm, a thickness of 5 mm and a width of 500 mm was spray-coated with a release agent (manufactured by Kapia Corporation) and was then rotated. Then, the prepared semiconductive polyamic acid solution was uniformly applied onto the mold using a dispenser coater. Thereafter, the mold coated with the semiconductive polyamic acid solution was put into a drying oven, was heated at a heating rate of 10°C/min, was then left at 100°C, 200°C and 300°C for 30 minutes, respectively, to complete an imidization reaction and simultaneously to completely remove a solvent and moisture. Then, the reaction product was cooled to obtain a polyimide film. Finally, a seamless belt having a thickness of 65µm was fabricated using the obtained polyimide film, and both ends of the seamless belt were cut to have a width of 300 mm.

### Example 2

1488 g of DMF, 1.30 g of carbon nanotubes (multiwall carbon nanotubes: NC7000, manufactured by Nanocyl Corporation) and 1.30 g of a dispersant (Triton X-100) were mixed in a 2L four-neck flask provided with a mechanical stirrer, a reflux condenser and a nitrogen inlet, and then nitrogen was introduced into the four-neck flask. Subsequently, the mixture was uniformly dispersed by ultrasonic waves of 200 W and 20 kHz for 60 minutes to obtain a carbon nanotube-dispersed liquid. Subsequently, a temperature-controllable water bath was provided, and a reaction temperature was set at 30°C, and then 68.7 g of ODA (manufactured by Wakayama Corporation, Japan) and 24.7 g of 1,4-PDA (manufactured by Dupont Corporation) were dissolved in the carbon nanotube-dispersed liquid, and then 166.6 g of BPDA (manufactured by Ube Industries, Ltd.) was added thereto. After the raw material was completely introduced, the temperature of a reactor was maintained to 40°C, and simultaneously the reaction product was aged for 5 hours to prepare semiconductive polyamic acid.

The prepared semiconductive polyamic acid was a uniform black solution, and had a viscosity of 25 Pa.s (250 poises).

A seamless mold made of chromium-plated SUS 304 and having a diameter of 300 mm, a thickness of 5 mm and a width of 500 mm was spray-coated with a release agent (manufactured by Kapia Corporation) and was then rotated. Then, the prepared semiconductive polyamic acid solution was uniformly applied onto the mold using a dispenser coater. Thereafter, the mold coated with the semiconductive polyamic acid solution was put into a drying oven, was heated at a heating rate of 10°C/min, was then left at 100°C, 200°C and 300°C for 30 minutes, respectively, to complete an imidization reaction and simultaneously to completely remove a solvent and moisture. Then, the reaction product was cooled to obtain a polyimide film. Finally, a seamless belt having a thickness of 65µm was fabricated using the obtained polyimide film, and both ends of the seamless belt were cut to have a width of 300 mm.

### Example 3

1488 g of DMF, 1.30 g of carbon nanotubes (multiwall carbon nanotubes: NC7000, manufactured by Nanocyl Corporation) and 1.30 g of a dispersant (Triton X-100) were mixed in a 2L four-neck flask provided with a mechanical stirrer, a reflux condenser and a nitrogen inlet, and then nitrogen was introduced into the four-neck flask. Subsequently, the mixture was dispersed by ultrasonic waves of 200 W and 40 kHz for 30 minutes, and was then centrifugally-separated at rotation speed of 12000 rpm for 5 minutes using a centrifugal separator (RC5C, manufactured by Sorvall Instruments Corporation) to allow solids to settle to the bottom of the centrifugal separator. Then, the settled solids were removed to obtain a carbon nanotube-dispersed liquid. Subsequently, a temperature-controllable water bath was provided, and a reaction temperature was set at 35°C, and then 68.7 g of ODA (manufactured by Wakayama Corporation, Japan) and 24.7 g of 1,4-PDA (manufactured by Dupont Corporation) were dissolved in the carbon nanotube-dispersed liquid, and then 166.6 g of BPDA (manufactured by Ube Industries, Ltd.) was added thereto. After the raw material was completely introduced, the temperature of a reactor was decreased to 25°C, and then the reaction product was aged for 72 hours to prepare semiconductive polyamic acid.

The prepared semiconductive polyamic acid was a uniform black solution, and had a viscosity of 20 Pa.s (200 poises).

A seamless mold made of chromium-plated SUS 304 and having a diameter of 300 mm, a thickness of 5 mm and a width of 500 mm was spray-coated with a release agent (manufactured by Kapia Corporation) and was then rotated. Then, the prepared semiconductive polyamic acid solution was uniformly applied onto the mold using a dispenser coater. Thereafter, the mold coated with the semiconductive polyamic acid solution was put into a drying oven, was heated at a heating rate of 10°C/min, was then left at 100°C, 200°C and 300°C for 30 minutes, respectively, to complete an imidization reaction and simultaneously to completely remove a solvent and moisture. Then, the reaction product was cooled to obtain a polyimide film. Finally, a seamless belt having a thickness of 65µm was fabricated using the obtained polyimide film, and both ends of the seamless belt were cut to have a width of 300 mm.

### Example 4

1488 g of DMF, 1.30 g of carbon nanotubes (multiwall carbon nanotubes: NC7000, manufactured by Nanocyl Corporation) and 1.30 g of a dispersant (Triton X-100) were mixed in a 2L four-neck flask provided with a mechanical stirrer, a reflux condenser and a nitrogen inlet, and then nitrogen was introduced into the four-neck flask. Subsequently, the mixture was dispersed by ultrasonic waves of 200 W and 40 kHz for 30 minutes, and was then centrifugally-separated at rotation speed of 12000 rpm for 5 minutes using a centrifugal separator (RC5C, manufactured by Sorvall Instruments Corporation) to allow solids to settle to the bottom of the centrifugal separator. Then, the settled solids were removed to obtain a carbon nanotube-dispersed liquid. Subsequently, a temperature-controllable water bath was provided, and a reaction temperature was set at 35°C, and then 68.7 g of ODA (manufactured by Wakayama Corporation, Japan) and 24.7 g of 1,4-PDA (manufactured by Dupont Corporation) were dissolved in the carbon nanotube-dispersed liquid, and then 166.6 g of BPDA (manufactured by Ube Industries, Ltd.) was added thereto. After the raw material was completely introduced, the temperature of a reactor was maintained, and the reaction product was aged for 24 hours to prepare semiconductive polyamic acid.

The prepared semiconductive polyamic acid was a uniform black solution, and had a viscosity of 24 Pa.s (240 poises).

A seamless mold made of chromium-plated SUS 304 and having a diameter of 300 mm, a thickness of 5 mm and a width of 500 mm was spray-coated with a release agent (manufactured by Kapia Corporation) and was then rotated. Then, the prepared semiconductive polyamic acid solution was uniformly applied onto the mold using a dispenser coater. Thereafter, the mold coated with the semiconductive polyamic acid solution was put into a drying oven, was heated at a heating rate of 10°C/min, was then left at 100°C, 200°C and 300°C for 30 minutes, respectively, to complete an imidization reaction and simultaneously to completely remove the solvent and moisture. Then, the reaction product was cooled to obtain a polyimide film. Finally, a seamless belt having a thickness of 65µm was fabricated using the obtained polyimide film, and both ends of the seamless belt were cut to have a width of 300 mm.

### Comparative Example 1

1497 g of DMF, 1.30 g of carbon nanotubes (multiwall carbon nanotubes: NC7000, manufactured by Nanocyl Corporation) and 1.30 g of a dispersant (Triton X-100) were mixed in a 2L four-neck flask provided with a mechanical stirrer, a reflux condenser and a nitrogen inlet, and then nitrogen was introduced into the four-neck flask. Subsequently, the mixture was uniformly dispersed by ultrasonic waves of 200 W and 20 kHz for 60 minutes to obtain a carbon nanotube-dispersed liquid. Subsequently, a temperature-controllable water bath was provided, and the reaction temperature was set at 30°C, and then 68.7 g of ODA (manufactured by Wakayama Corporation, Japan) and 24.7 g of 1,4-PDA (manufactured by Dupont Corporation) were dissolved in the carbon nanotube-dispersed liquid, and then 168.0 g of BPDA (manufactured by Ube Industries, Ltd.) was added thereto. After the raw material was completely introduced, the temperature of the reactor was maintained to 40°C, and simultaneously the reaction product was aged for 1 hour to prepare semiconductive polyamic acid.

The prepared semiconductive polyamic acid was a uniform black solution, and had a viscosity of 103 Pa.s (1030 poises).

A seamless mold made of chromium-plated SUS 304 and having a diameter of 300 mm, a thickness of 5 mm and a width of 500 mm was spray-coated with a release agent (manufactured by Kapia Corporation) and was then rotated. Then, there were attempts to uniformly apply the prepared semiconductive polyamic acid solution onto the mold using a dispenser coater, but the prepared semiconductive polyamic acid solution was not uniformly applied onto the mold because it had a high weight-average molecular weight of 1,000,000 and a high viscosity of 103 Pa.s (1030 poises).

### Comparative Example 2

1488 g of DMF, 1.30 g of carbon nanotubes (multiwall carbon nanotubes: NC7000, manufactured by Nanocyl Corporation) and 1.30 g of a dispersant (Triton X-100) were mixed in a 2L four-neck flask provided with a mechanical stirrer, a reflux condenser and a nitrogen inlet, and then nitrogen was introduced into the four-neck flask. Subsequently, the mixture was dispersed by ultrasonic waves of 200 W and 40 kHz for 30 minutes, and was then centrifugally-separated at rotation speed of 12000 rpm for 5 minutes using a centrifugal separator (RC5C, manufactured by Sorvall Instruments Corporation) to allow solids to settle to the bottom of the centrifugal separator. Then, the settled solids were removed to obtain a carbon nanotube-dispersed liquid. Subsequently, a temperature-controllable water bath was provided, and the reaction temperature was set at 20°C, and then 68.7 g of ODA (manufactured by Wakayama Corporation, Japan) and 24.7 g of 1,4-PDA (manufactured by Dupont Corporation) were dissolved in the carbon nanotube-dispersed liquid, and then 166.6 g of BPDA (manufactured by Ube Industries, Ltd.) was added thereto. After the raw material was completely introduced, the reaction product was immediately ejected without being aged to prepare semiconductive polyamic acid.

The prepared semiconductive polyamic acid was a uniform black solution, and had a viscosity of 30 Pa.s (300 poises).

A seamless mold made of chromium-plated SUS 304 and having a diameter of 300 mm, a thickness of 5 mm and a width of 500 mm was spray-coated with a release agent (manufactured by Kapia Corporation) and was then rotated. Then, the prepared semiconductive polyamic acid solution was uniformly applied onto the mold using a dispenser coater. Thereafter, the mold coated with the semiconductive polyamic acid solution was put into a drying oven, was heated at a heating rate of 10°C/min, was then left at 100°C, 200°C and 300°C for 30 minutes, respectively, to complete an imidization reaction and simultaneously to completely remove the solvent and moisture. Then, the reaction product was cooled to obtain a polyimide film. Finally, a seamless belt having a thickness of 65µm was fabricated using the obtained polyimide film, and both ends of the seamless belt were cut to have a width of 300 mm.

### Comparative Example 3

1497 g of DMF, 1.30 g of carbon nanotubes (multiwall carbon nanotubes: NC7000, manufactured by Nanocyl Corporation) and 1.30 g of a dispersant (Triton X-100) were mixed in a 2L four-neck flask provided with a mechanical stirrer, a reflux condenser and a nitrogen inlet, and then nitrogen was introduced into the four-neck flask. Subsequently, the mixture was uniformly dispersed by ultrasonic waves of 200 W and 20 kHz for 60 minutes to obtain a carbon nanotube-dispersed liquid. Subsequently, a temperature-controllable water bath was provided, and the reaction temperature was set at 30°C, and then 68.7 g of ODA (manufactured by Wakayama Corporation, Japan) and 24.7 g of 1,4-PDA (manufactured by Dupont Corporation) were dissolved in the carbon nanotube-dispersed liquid, and then 164.5 g of BPDA (manufactured by Ube Industries, Ltd.) was added thereto. After the raw material was completely introduced, the reaction product was immediately ejected without being aged to prepare semiconductive polyamic acid.

The prepared semiconductive polyamic acid was a uniform black solution, and had a viscosity of 103 Pa.s (1030 poises).

A seamless mold made of chromium-plated SUS 304 and having a diameter of 300 mm, a thickness of 5 mm and a width of 500 mm was spray-coated with a release agent (manufactured by Kapia Corporation) and was then rotated. Then, the prepared semiconductive polyamic acid solution was uniformly applied onto the mold using a dispenser coater. Thereafter, the mold coated with the semiconductive polyamic acid solution was put into a drying oven, was heated at a heating rate of 10°C/min, was then left at 100°C, 200°C and 300°C for 30 minutes, respectively, to complete an imidization reaction and simultaneously to completely remove a solvent and moisture. Then, the reaction product was cooled to obtain a polyimide film. Finally, a seamless belt having a thickness of 65µm was fabricated using the obtained polyimide film, and both ends of the seamless belt were cut to have a width of 300 mm.

The physical properties of the endless belts of Examples 1 to 4 and Comparative Examples 1 to 3 were evaluated as follows.

### (1) Molecular weight distribution and weight average molecular weight

Each of the polyamic acids prepared in Examples 1 to 4 and Comparative Examples 1 to 3 was dissolved in 0.2% DMAc (dimethylacetamide), filtered by a 0.45um PTFE syringe filter and then injected into GPC (manufactured by Varian Corporation). A developing solvent was used under the conditions of a ratio of 30mM LiBr, 30mM H₃PO₄ in THF: DMF = 1:1, a developing rate of 1.0 ml/min and a temperature of 40°C. The number average molecular weight and weight average molecular weight of the polyamic acid was obtained based on 0.1% polystyrene standards. The calibration curve thereof was calculated using nine kinds of polystyrene standards having different molecular weight, and the molecular weights of the polystyrene standards were 723000, 402100, 219000, 89300, 52200, 30300, 13000, 7000 and 5000, respectively.

### (2) Common logarithm value of surface resistivity deviation

Among the endless belts manufactured in Examples 1 to 4 and Comparative Examples 1 to 3, ten endless belts were selected. Each of the selected endless belts was cut in a width direction to be unfolded in the form of a two-dimensional film. Five points were selected from the inner surface of each of the endless belts, and five points were selected from the outer surface thereof. The surface resistance values at the selected ten points were measured for 10 seconds using a Hiresta UP resistance meter (manufactured by Mitsubishi Chemical Corporation) provided with a UR-100 probe under an applied voltage of 100 V. The common logarithms of the maximum and minimum values of the ten measured surface resistance values were obtained, and the difference thereof was calculated.

### (3) Folding endurance

Ten test pieces each having a size of 15 mm x 100 mm were collected from one of the endless belts, and then hung on a MIT tester. The folding endurance of each of the test pieces was measured under the conditions of R=2, a refraction angle of 135° and a rotation speed of 175 rpm. The folding endurance thereof was obtained by measuring the number of each test piece being folded until it severed.

### (4) Glossiness

The glossiness of the endless belts was measured at an angle of 60°using a gloss meter.
Equipment name: Gloss Meter
Model name: VG2000
Manufacturing company: Nippon Denshoku
The results thereof are given in Table 1 below.

Table 1

**[Table 1]**

| | Mw /Mn | Mw | common logarithm value of surface resistivity deviation between ten belts (log /sq) | common logarithm value of surface resistivity deviation of one belt (log /sq) | Folding endurance (times) | Glossiness |
|---|---|---|---|---|---|---|
| Exp. 1 | 1.3 | 56,000 | 0.5 | 0.3 | 50,000 | 120 |
| Exp. 2 | 3.0 | 150,000 | 0.8 | 0.3 | 26,000 | 100 |
| Exp. 3 | 3.0 | 120,000 | 0.7 | 0.2 | 14,000 | 100 |
| Exp. 4 | 2.9 | 270,000 | 0.8 | 0.2 | 30,000 | 109 |
| Comp. Exp. 1 | 2.0 | 1,000,000 | unmeasurable | unmeasurable | unmeasurable | 100 |
| Comp. Exp. 2 | 4.0 | 100,000 | 1.9 | 0.9 | 800 | 70 |
| Comp. Exp. 3 | 1.5 | 20,000 | 2.0 | 1.5 | 500 | 40 |

From the results of Table 1 above, it can be ascertained that the endless belt including a polyimide resin having a molecular weight distribution (Mw/Mn) of 1.3 ∼ 3.0 and a weight average molecular weight (Mw) of 30,000 ∼ 300,000 according to an embodiment of the present invention has a small surface resistivity deviation and a high glossiness of 100 or more, has a uniform surface resistivity deviation between ten endless belts, so that the endless belt can uniformly transfer toner, and the durability of the endless belt can be substantially improved because of high folding endurance.

Although the preferred embodiments of the present invention have been disclosed for illustrative purposes, those skilled in the art will appreciate that various modifications, additions and substitutions are possible, without departing from the scope of the appended claims.

## Claims

1. A method of manufacturing an endless belt, comprising the steps of:
reacting a diamine monomer with a dianhydride monomer in a reactor filled with a conductive filler-dispersed liquid to obtain a reaction product, aging the reaction product and then discharging the aged reaction product from the reactor to prepare a semiconductive polyamic acid solution having a molecular weight distribution (Mw/Mn) of 1.3 ∼ 3.0 and a weight average molecular weight (Mw) of 30,000 ∼ 300,000; and
applying the semiconductive polyamic acid solution to a seamless mold and completing an imidization reaction to obtain a polyimide film,
wherein the aging of the reaction product is performed at a temperature of 25 ∼ 55°C for 3 ∼ 72 hours.

2. An endless belt, comprising a polyimide resin and a conductive filler, wherein the polyimide resin has a molecular weight distribution (Mw/Mn) of 1.3 ∼ 3.0 and a weight average molecular weight (Mw) of 30,000 ∼ 300,000,
wherein the polyimide resin is the reaction product aging at a temperature of 25 ∼ 55°C for 3 ∼ 72 hours after reacting a diamine monomer and a dianhydride monomer, the endless belt being obtainable by the process according to claim 1
wherein the endless belt has a folding endurance of 1000 times or more,
wherein the endless belt has a glossiness of 100 or more.

## Patentansprüche

1. Verfahren zur Herstellung eines Endlosbandes, umfassend die Schritte:
Umsetzen eines Diamin-Monomeren mit einem Dianhydrid-Monomeren in einem Reaktor, der mit einer leitfähigen füllstoff-dispergierten Flüssigkeit befüllt ist, unter Erhalt eines Reaktionsprodukts, Altern lassen des Reaktionsprodukts und anschließendes Entnehmen des gealterten Reaktionsprodukts aus dem Reaktor unter Herstellung einer halbleitenden Polyamsäure-Lösung mit einer Molekulargewichtsverteilung (Mw/Mn) von 1,3 bis 3,0 und einem gewichtsmittleren Molekulargewicht (Mw) von 30000 bis 300000; und
Auftragen der halbleitenden Polyamsäure-Lösung auf eine nahtlose Form und Vervollständigen der Imidisierungsreaktion unter Erhalt eines Polyimid-Films,
worin das Altern lassen des Reaktionsprodukts bei einer Temperatur von 25 bis 55 °C innerhalb von 3 bis 72 Stunden durchgeführt wird.

2. Endlosband, umfassend ein Polyimidharz und einen leitfähigen Füllstoff, worin das Polyimidharz eine Molekulargewichtsverteilung (Mw/Mn) von 1,3 bis 3,0 aufweist und ein gewichtsmittleres Molekulargewicht (Mw) von 30000 bis 300000 hat,
worin das Polyimidharz das Reaktionsprodukt ist, welches bei einer Temperatur von 25 bis 55 °C innerhalb von 3 bis 72 Stunden nach Umsetzen eines Diamin-Monomeren und eines Dianhydrid-Monomeren altert, wobei das Endlosband durch das Verfahren gemäß Anspruch 1 erhältlich ist,
worin das Endlosband eine Dauerbiegefestigkeit von 1000 Malen oder mehr aufweist,
worin das Endlosband einen Glanz von 100 oder mehr hat.

## Revendications

1. Procédé de fabrication d'une courroie sans fin, comprenant les étapes consistant à:
faire réagir un monomère de diamine avec un monomère de dianhydride dans un réacteur rempli d'un liquide conducteur dispersé dans une charge pour obtenir un produit de réaction, vieillir le produit de réaction et puis décharger le produit de la réaction âgé du réacteur afin de préparer une solution d'acide polyamique semi-conductrice ayant une distribution de poids moléculaire (Mw/Mn) de 1,3 ∼ 3,0 et un poids moléculaire moyen en poids (Mw) de 30.000 - 300.000 ; et
appliquer la solution d'acide polyamique semi-conductrice dans un seul moule et compléter une réaction d'imidation afin d'obtenir un film de polyimide,
dans lequel le vieillissement du produit de réaction est effectué à une température de 25 ∼ 55 °C pendant 3 ∼ 72 heures

2. Une courroie sans fin, comprenant une résine de polyimide et une charge conductrice, dans laquelle la résine de polyimide a une distribution de poids moléculaire (Mw/Mn) de 1,3 ∼ 3,0 et un poids moléculaire moyen en poids (Mw) de 30, 000 ∼ 300 000,
dans laquelle la résine de polyimide est le produit de la réaction vieillissant à une température de 25 ∼ 55 °C pendant 3 ∼ 72 heures après faire réagir un monomère de diamine avec un monomère de dianhydride,
la courroie sans fin pouvant être obtenue par le procédé selon la revendication 1,
dans laquelle la courroie sans fin présente une résistance au pliage de 1000 fois ou plus,
dans laquelle la courroie sans fin a une brillance de 100 ou plus.
